# EUROPEAN PATENT APPLICATION

(11) **EP 4 509 227 A1**
(43) Date of publication of application: **19.02.2025**
(21) Application number: 23802136.4
(22) Date of filing: 21.06.2023
(51) Int. Cl.: B05C 11/10, A61M 1/00

(54) **FEEDING DEVICE, GLUING APPARATUS, AND CONTROL METHOD FOR FEEDING DEVICE**

(71) Applicant: Contemporary Amperex Technology (Hong Kong) Limited, Central, Central And Western District (HK)
(72) Inventor: ZHOU, Xinyu, Ningde, Fujian 352100 (CN); LU, Dejun, Ningde, Fujian 352100 (CN); WU, Ying, Ningde, Fujian 352100 (CN); YU, Dingshan, Ningde, Fujian 352100 (CN)
(74) Representative: Gong, Jinping
(86) International application number: PCT/CN2023/101725
(87) International publication number: WO 2024/259635

(57) **Abstract**

Disclosed are a feeding apparatus, a gluing device, and a control method of the feeding apparatus. The feeding apparatus (60) includes a pumping mechanism (10) having a suction end (12) configured to suction a material fluid (MF) from a material container (MC), where the suction end (12) is provided with a pressing member (11); an exhaust mechanism (20A) disposed on the pressing member (11) and configured to evacuate a first region (Z1) formed between the pressing member (11) and a liquid surface of the material fluid (MF) in the material container (MC); and a controller (40) signally connected to the exhaust mechanism (20A) and configured to: in response to the pressing member (11) arriving at a first relative position with respect to the material container (MC), make the exhaust mechanism (20A) to perform evacuation.

## Description

### TECHNICAL FIELD

This disclosure relates to a feeding apparatus, a gluing device, and a control method of a feeding apparatus.

### BACKGROUND

Secondary batteries, especially lithium-ion batteries, have advantages like high voltage, high specific energy density, long cycle life, environmental friendliness, wide operating temperature range, and low self-discharge. Therefore, they have been widely used in power devices of portable electronic devices and large-scale new energy electric vehicles, playing a significant role in addressing human environmental pollution and energy crisis.

In the process of manufacturing secondary batteries, gluing machines can be used to apply adhesive to electrode assemblies, battery modules, or battery boxes to implement functions such as binding and sealing. Currently, there is still room for improvement in the adhesive coating process.

### SUMMARY

According one aspect of this disclosure, a feeding apparatus is provided, including a pumping mechanism having a suction end configured to suction a material fluid from a material container, where the suction end is provided with a pressing member; an exhaust mechanism disposed on the pressing member and configured to evacuate a first region formed between the pressing member and a liquid surface of the material fluid in the material container; and a controller signally connected to the exhaust mechanism and configured to: in response to the pressing member arriving at a first relative position with respect to the material container, make the exhaust mechanism to perform evacuation.

During feeding the material fluid in the material container, in response to the pressing member reaching the first relative position with respect to the material container, the controller makes the exhaust mechanism evacuate the first region formed between the pressing member disposed on the suction end of the pumping mechanism and the liquid surface of the material fluid, so as to eliminate bubbles in the material fluid pumped to the largest extent, save labor, and reduce quality risks caused by imprecise or inexperienced manual operations.

In some embodiments, the feeding apparatus further includes a vacuum level sensing element disposed on the exhaust mechanism or the pressing member and configured to sense a vacuum level of the first region; and a driving mechanism drivably connected to the pressing member and configured to drive the pressing member to move with respect to the material container; where the controller is signally connected to the vacuum level sensing element, the pumping mechanism, and the driving mechanism and configured to: in response to the vacuum level of the first region reaching a preset vacuum level threshold, make the exhaust mechanism stop evacuating, make the pressing member press the liquid surface of the material fluid in the material container via the driving mechanism, and make the pumping mechanism pump the material fluid.

The vacuum level sensing element can sense the vacuum level of the first region, and in response to the vacuum level of the first region reaching the preset vacuum level threshold, the controller separately controls the exhaust mechanism, the driving mechanism, and the pumping mechanism to stop evacuating, stop the pressing member from pressing the liquid surface, and stop pumping the material fluid. This ensures that the pumping operation can automatically proceed after the evacuation is completed, making the feeding process smoother and improving process efficiency.

In some embodiments, the preset vacuum level threshold is adjustable.

With the preset vacuum level threshold being adjustable, when implementing automatic pumping of material fluids, the controller can make the set vacuum level threshold adapt to different types of material fluids, satisfying the pumping requirements of different types of material fluids.

In some embodiments, the feeding apparatus further includes an intake mechanism disposed on the pressing member and configured to inflate the first region; where the controller is signally connected to the intake mechanism and configured to: in response to the pressing member reaching a second relative position with respect to the material container, make the intake mechanism perform inflation so that the pressing member detaches from the material container.

By responding to the pressing member reaching the second relative position with respect to the material container, the controller makes the intake mechanism automatically inflate the first region formed between the pressing member and the liquid surface of the material fluid, allowing the pressing member to smoothly and quickly detach from the material container so that the material container is quickly replaced with another one, allowing for continuous material fluid pumping and improving process efficiency.

In some embodiments, the feeding apparatus further includes a driving mechanism drivably connected to the pressing member and configured to drive the pressing member to move with respect to the material container; and a position sensing element signally connected to the controller and configured to sense at least one of the pumping mechanism, the driving mechanism, and the pressing member to determine a relative position of the pressing member with respect to the material container.

The relative position of the pressing member with respect to the material container can be determined in various ways. In the embodiment in which the driving mechanism is drivably connected to the pressing member, the position sensing element can sense at least one of the pumping mechanism, the driving mechanism, and the pressing member to determine the relative position of the pressing member with respect to the material container.

In some embodiments, the driving mechanism includes a movable driving member, where the driving member is connected to the pumping mechanism so that the pressing member moves with respect to the material container along with the movement of the driving member, and the position sensing element includes a first position sensor configured to sense movement of the driving member to a first movement position corresponding to the first relative position.

The movable driving member is used to drive the pumping mechanism to move and the first position sensor is used to sense the driving member reaching the first movement position. When it is sensed that the driving member has reached the first movement position, the pressing member reaches the first relative position accordingly, triggering the evacuation operation of the exhaust mechanism. Compared with a sensing element that directly senses the position of the pressing member, the first position sensor that senses the movement position of the driving member is more convenient for debugging and mounting, and either a contact or non-contact sensor can be used as needed.

In some embodiments, the position sensing element includes a second position sensor, the feeding apparatus further includes an intake mechanism disposed on the pressing member, and the controller is signally connected to the second position sensor and the intake mechanism and configured to: in response to the pressing member reaching a second relative position with respect to the material container, make the intake mechanism perform inflation so that the pressing member detaches from the material container; where the second position sensor is configured to sense the movement of the driving member to a second movement position corresponding to the second relative position.

The second position sensor is used to sense the driving member reaching the second movement position. When it is sensed that the driving member has reached the second movement position, the pressing member reaches the second relative position accordingly, triggering the inflation action of the intake mechanism. The second position sensor is more convenient for debugging and mounting and either a contact or non-contact sensor type can be used as needed.

In some embodiments, the driving mechanism includes a connecting plate and a piston cylinder having a cylinder barrel and piston rods, the connecting plate is fixedly connected to the piston rods and together with the connecting plate serves as the driving member that is fixedly connected to the pumping mechanism, and the first position sensor and the second position sensor are connected to the cylinder barrel via a mounting rack and each configured to check whether a sensing target disposed on the piston rod is in position.

For the piston cylinder implementing linear driving, the first position sensor and the second position sensor may be disposed on the outer side of the piston cylinder to check the sensing target on the piston rod, making it convenient for operators to debug and mount the sensors.

In some embodiments, the mounting rack has an adjustment groove, a length direction of the adjustment groove is parallel to a linear direction of reciprocation of the piston rod, and the first position sensor and the second position sensor are disposed within the adjustment groove and adjustable in the length direction of the adjustment groove.

Based on the linear direction of reciprocation of the piston rod, the first position sensor and the second position sensor are disposed in the adjustment groove extending in that direction, and the positions of the sensors can be adjusted in the length direction of the adjustment groove. In this way, the positions of the sensors can be adaptively adjusted based on factors such as the heights of different material containers and the liquid levels of material fluids, enabling more precise timing for automatic evacuation and automatic inflation.

In some embodiments, the exhaust mechanism includes an air valve, and the air valve is detachably disposed on the pressing member and operatively connected to an external air path.

The exhaust mechanism is operatively connected to the external air path through the air valve detachably mounted on the pressing member, facilitating the cleaning and replacement of the air valve while conveniently evacuating the first region formed between the pressing member and the liquid surface of the material fluid through the external air path.

In some embodiments, the air valve includes a cylinder valve body having a hollow second region inside, where the cylinder valve body also has a first air port and a second air port in communication with the second region, the first air port is in communication with the first region, and the second air port is operatively connected to an external air path; a valve core at least partially located within the second region and movable with respect to the second region; a valve core driving structure connected to the valve core and configured to drive the valve core to move to different positions within the second region so as to close or open air paths corresponding to the first air port and the second air port in the second region; and a reset member connected to the valve core and configured to: in response to the valve core driving structure stopping operation, move the valve core to a closing position that enables the air paths corresponding to the first air port and the second air port in the second region to be closed.

The reset member is disposed within the air valve and the reset member is made to respond to the cessation of operation of the valve core driving structure, so that the valve core is moved to the closing position that enables the air path corresponding to the first air port and the second air port to be closed. In this way, in an anomaly case that the valve core driving structure stops operating due to power failure or closed air path, the air valve can close itself through the reset member, preventing the contamination or damage of the air valve by the suction of the material fluid into the air valve in an anomaly case.

In some embodiments, the valve core driving structure includes a cylinder piston, the cylinder piston is connected to the valve core, and the reset member includes a spring located in the second region and connected to the cylinder piston.

For the air valve that employs the cylinder piston to drive the valve core, the spring provides elastic force for the valve core to reset to the closing position in an anomaly case, implementing self-closing. This type of mechanical spring reset member is reliable and durable, contributing to extending the service life of the air valve.

In some embodiments, the air valve further includes a sealing assembly, and the sealing assembly is located at the first air port to make the valve core at the position that enables the air paths corresponding to the first air port and the second air port in the second region to be closed seal the first air port via the sealing assembly.

With the sealing assembly disposed on the first air port, the first air port can be sealed when the valve core is driven by the valve core driving structure to close the first air port or closes the first air port, thereby reducing the risk of suction of material fluid caused by air leakage at the first air port.

In some embodiments, the feeding apparatus further includes an intake mechanism disposed on the pressing member and configured to inflate the first region; where the intake mechanism shares the air valve with the exhaust mechanism.

The intake mechanism and the exhaust mechanism can be independently disposed or integrated into one module for convenient mounting and maintenance. With the intake mechanism and the exhaust mechanism sharing the air valve, less space can be occupied during the mounting on the pressing member, thereby saving removing and mounting time and improving the removing and mounting efficiency.

In some embodiments, the exhaust mechanism further includes a first control valve, the air valve operatively communicates with an external vacuum air path via the first control valve, the intake mechanism further includes a second control valve, and the air valve operatively communicates with an external positive pressure air path via the second control valve.

For the exhaust mechanism and the intake mechanism that share the air valve, the vacuum air path and the positive pressure air path are made to operatively communicate with the air valve by the first control valve and the second control valve respectively, implementing reliable control of air intake or exhaust. This reduces space occupied and reduces the possibility of structural and piping interference between the exhaust mechanism, the intake mechanism, and other components.

In some embodiments, a surface of the pressing member is provided with an air valve connector, and the air valve is threadedly connected to the air valve connector.

The air valve is mounted, through a threaded connection, on the air valve connector disposed on the surface of the pressing member, facilitating removing and replacement.

In some embodiments, the material fluid includes an adhesive.

Different types of material fluids may be used in different feeding scenarios, and different types of material fluids have different properties, parameters, and the like, for example, having different viscosities. In the embodiment in which the material fluid includes an adhesive, the pumping mechanism pumps the adhesive used for binding or sealing. In some embodiments, automatically evacuating the first region by using the exhaust mechanism can effectively reduce bubbles in the adhesive pumped, thereby improving the processing quality of the structure that utilizes the adhesive.

In some embodiments, the feeding apparatus further includes a driving mechanism, where the feeding apparatus is a pressure plate pump, the pressure plate pump includes a plunger pump serving as the pumping mechanism, a pressure plate serving as the pressing member, and a vertical cylinder serving as the driving mechanism, the pressure plate is disposed at a suction end of the plunger pump, and cylinder piston rods of the vertical cylinder are connected to the plunger pump via a mounting plate to drive the plunger pump to move.

In the embodiment in which the pressure plate pump is used as the feeding apparatus, the plunger pump can pump material fluids with a high viscosity, and the vertical cylinder can vertically drive the plunger pump to move up and down in the vertical direction so as to lift and drop the pressure plate.

According to one aspect of this disclosure, a gluing device is provided, including a material container configured to hold an adhesive; and the foregoing feeding apparatus, applied to the adhesive container to implement a gluing operation.

The gluing device employing the embodiments of the foregoing feeding apparatus can improve the automation of the gluing process, save labor, and reduce quality risks caused by imprecise or inexperienced manual operations.

According to an aspect of this disclosure, a control method of the foregoing feeding apparatus is provided, including: making the pressing member enter the material container; and in response to the pressing member reaching the first relative position with respect to the material container, making the exhaust mechanism evacuate the first region formed between the pressing member and the liquid surface of the material fluid in the material container.

During feeding the material fluid in the material container, in response to the pressing member reaching the first relative position with respect to the material container, the exhaust mechanism is made to evacuate the first region formed between the pressing member disposed on the suction end of the pumping mechanism and the liquid surface of the material fluid, so as to eliminate bubbles in the material fluid pumped to the largest extent, save labor, and reduce quality risks caused by inaccurate or inexperienced manual operations.

In some embodiments, the feeding apparatus further includes the vacuum level sensing element disposed on the exhaust mechanism or the pressing member, and the driving mechanism drivably connected to the pressing member, and the control method further includes: in response to the vacuum level sensing element sensing that the vacuum level of the first region has reached a preset vacuum level threshold, making the exhaust mechanism stop evacuating, making the pressing member press the liquid surface of the material fluid in the material container via the driving mechanism drivably connected to the pressing member, and making the pumping mechanism pump the material fluid.

The vacuum level sensing element senses the vacuum level of the first region, and the vacuum level of the first region reaching the preset vacuum level threshold is responded. In this way, the exhaust mechanism, the driving mechanism, and the pumping mechanism are separately controlled to stop evacuating, stop the pressing member from pressing the liquid surface, and stop pumping the material fluid. This ensures that the pumping operation can automatically proceed after the evacuation is completed, making the feeding process smoother and improving process efficiency.

In some embodiments, the control method further includes adjusting the preset vacuum level threshold to adapt to a type of the material fluid.

With the preset vacuum level threshold being adjustable, in implementing automatic pumping of material fluids, the set vacuum level threshold can adapt to different types of material fluids, satisfying the pumping requirements of different types of material fluids.

In some embodiments, the feeding apparatus further includes the intake mechanism disposed on the pressing member, and the control method further includes: in response to the pressing member reaching the second relative position with respect to the material container, making the intake mechanism perform inflation so that the pressing member detaches from the material container.

When a certain amount of the material fluid in the material container has been pumped, it is necessary to replace the material container with another one containing material fluid. During pumping, to stably and reliably pump the material fluid, the pressing member is usually in interference fit with the inner wall of the material container, making it somewhat difficult for the pressing member to detach from the material container. By responding to the pressing member reaching the second relative position with respect to the material container, the controller makes the intake mechanism automatically inflate the first region formed between the pressing member and the liquid surface of the material fluid, allowing the pressing member to smoothly and quickly detach from the material container so that the material container is quickly replaced with another one, allowing for continuous material fluid pumping and improving process efficiency.

### BRIEF DESCRIPTION OF DRAWINGS

To describe the technical solutions in the embodiments of this disclosure more clearly, the following briefly describes the accompanying drawings required for describing the embodiments of this disclosure. Apparently, the accompanying drawings in the following description show merely some embodiments of this disclosure, and a person of ordinary skills in the art may still derive other drawings from the accompanying drawings without creative efforts.

Refer to the drawings. A clearer understanding of this disclosure can be obtained from the following detailed description, in which:
FIG. 1 is a schematic diagram of signal connection according to some embodiments of a feeding apparatus of this disclosure;
FIG. 2 and FIG. 3 are schematic structural diagrams from different perspectives according to some embodiments of a feeding apparatus of this disclosure;
FIG. 4 is an enlarged schematic diagram of ellipse A in FIG. 3;
FIG. 5 is a schematic diagram of signal connection according to some other embodiments of a feeding apparatus of this disclosure;
FIG. 6A to FIG. 6D are state diagrams of the interior of a material container in different working processes according to some embodiments of a feeding apparatus of this disclosure;
FIG. 7 is a schematic structural diagram of an air valve according to some embodiments of a feeding apparatus of this disclosure;
FIG. 8 is a schematic sectional view along line BB shown in FIG. 7; and
FIG. 9 to FIG. 11 are schematic flowcharts according to some embodiments of a control method of a feeding apparatus of this disclosure.

It should be understood that sizes of various parts shown in the accompanying drawings are not drawn to scale. Additionally, the same or like reference signs denote the same or like components.

Description of reference signs:
10. pumping mechanism; 11. pressing member; 111. air valve connector; 112. pressure plate outer edge; 12. suction end;
20A. exhaust mechanism; 20B. intake mechanism; 21. air valve; 211. cylinder valve body; 212. valve core; 213. valve core driving structure; 213a. cylinder piston; 214. reset member; 214a. spring; 215. sealing assembly; 216. driving air port; 22. first control valve; 23. second control valve; 24. vacuum air path; 25. positive pressure air path; 26. connecting air path;
30. driving mechanism; 31. driving member; 311. piston rod; 312. connecting plate; 32. cylinder barrel; 33. base;
40. controller; 41. control box;
51. vacuum level sensing element; 52. position sensing element; 521. first position sensor; 522. second position sensor; 523. mounting rack; 524. adjustment groove;
60. feeding apparatus;
MC. material container; MF. material fluid; Z1. first region; Z2. second region; ST. sensing target; P1. first air port; and P2. second air port.

### DESCRIPTION OF EMBODIMENTS

The following describes in detail the embodiments of technical solutions of this disclosure with reference to the accompanying drawings. The following embodiments are merely used to describe technical solutions of this disclosure more explicitly, and therefore they are merely used as examples and do not constitute any limitations on the protection scope of this disclosure.

Unless otherwise defined, all technical and scientific terms used herein shall have the same meanings as commonly understood by those skilled in the art to which this disclosure relates. The terms used herein are intended to merely describe the specific embodiments rather than to limit this disclosure. The terms "include", "include", and "have" and any other variations thereof in the specification, claims and brief description of drawings of this disclosure are intended to cover non-exclusive inclusions.

In the description of the embodiments of this disclosure, the terms "first", "second", and the like are merely intended to distinguish between different objects, and shall not be understood as any indication or implication of relative importance or any implicit indication of the number, sequence or primary-secondary relationship of the technical features indicated. In the description of the embodiments of this disclosure, "a plurality of" means at least two unless otherwise specifically stated.

In this specification, reference to "embodiment" means that specific features, structures or characteristics described with reference to the embodiment may be incorporated in at least one embodiment of this disclosure. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of the embodiments of this disclosure, the term "a plurality of" means more than two (inclusive). Similarly, "a plurality of groups" means more than two (inclusive) groups, and "a plurality of pieces" means more than two (inclusive) pieces.

In the description of the embodiments of this disclosure, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this disclosure rather than indicating or implying that the means or components mentioned must have specific orientations or must be constructed or manipulated according to specific orientations, and therefore shall not be construed as any limitations on embodiments of this disclosure.

In the description of the embodiments of this disclosure, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this disclosure as appropriate to specific situations.

In the process of manufacturing secondary batteries, gluing machines can be used to apply adhesives to battery related products such as electrode assemblies, battery cells, battery modules, or battery boxes to implement functions such as binding and sealing. Considering that an adhesive with bubbles may cause a quality issue in the product glued, operators manually control the air path control box during gluing to evacuate the space between the pressure plate and the adhesive surface, so as to eliminate bubbles in the pumped adhesive as much as possible.

Research has revealed that the manual operation of vacuum evacuation by operators requires sufficient proficiency. If operators are inexperienced or not focused, they may not be able to sufficiently remove bubbles from the adhesive, resulting in quality risks of battery-related products. Furthermore, the vacuum evacuation apparatus lacks error prevention functionality, making it possible that failure occurs due to adhesive infiltration, thereby increasing quality risks of products.

In view of this, the embodiments of this disclosure provide a feeding apparatus, a gluing device, and a control method of the feeding apparatus, which can reduce quality risks of products that use a material fluid.

According to one aspect of this disclosure, a feeding apparatus is provided, including a pumping mechanism having a suction end configured to suction a material fluid from a material container, where the suction end is provided with a pressing member; an exhaust mechanism disposed on the pressing member and configured to evacuate a first region formed between the pressing member and a liquid surface of the material fluid in the material container; and a controller signally connected to the exhaust mechanism and configured to: in response to the pressing member arriving at a first relative position with respect to the material container, make the exhaust mechanism to perform evacuation.

During feeding the material fluid in the material container, in response to the pressing member reaching the first relative position with respect to the material container, the controller makes the exhaust mechanism evacuate the first region formed between the pressing member disposed on the suction end of the pumping mechanism and the liquid surface of the material fluid, so as to eliminate bubbles in the material fluid pumped to the largest extent, save labor, and reduce quality risks caused by imprecise or inexperienced manual operations.

In this embodiment of this disclosure, the feeding apparatus is configured to supply the material fluid to apply it a target object in a purpose of achieving a specific function. The material fluid herein may be a liquid, a mixture of liquid and gas, or a mixture of liquid and solid.

In some embodiments, the material fluid includes an adhesive. The feeding apparatus supplies the adhesive to apply it to the target object such as an electrode assembly, a battery cell, a battery module, a battery box, or an electric device to achieve the function like binding, sealing, insulation, or conduction. For example, the adhesive is applied to the surface of an electrode assembly to bind the electrode assembly with an insulating film, an insulating adhesive is wrapped around terminals of a battery cell to prevent short circuits, a waterproof adhesive is applied to an inner connection part of a battery box to implement waterproof sealing, and the like. In some other embodiments, the material fluid may alternatively include an active substance slurry used for application on the surface of a current collector substrate to form an electrode plate.

In scenarios in which the target object is a battery-related product such as an electrode assembly, a battery cell, a battery module, or a battery box, the battery is a single physical module that includes one or more battery cells for providing a higher voltage and capacity.

Battery cells may be secondary batteries. Secondary batteries refer to battery cells that can continue to be used after discharged because their active materials can be reactivated through recharging, for example, lithium-ion batteries, sodium-ion batteries, sodium-lithium-ion batteries, lithium metal batteries, sodium metal batteries, lithium-sulfur batteries, magnesium-ion batteries, nickel-metal hydride batteries, nickel-cadmium batteries, and lead-acid batteries.

A battery cell may include an electrode assembly. The electrode assembly may include a first electrode plate and a second electrode plate with opposite polarities and further includes a separator disposed between the first electrode plate and the second electrode plate. In some embodiments, the first electrode plate is a positive electrode plate, and the second electrode plate is a negative electrode plate. In some other embodiments, the first electrode plate is a negative electrode plate, and the second electrode plate is a positive electrode plate. During charging and discharging of the battery cell, active ions (for example, lithium ions) migrate between the positive electrode plate and the negative electrode plate. The separator is sandwiched between the positive electrode plate and the negative electrode plate to prevent short circuits between the positive and negative electrodes and allow active ions to pass through.

In some implementations, the battery cell may include a housing. The housing is configured to package components like the electrode assembly and electrolyte. The housing may be a steel, aluminum, plastic (such as polypropylene), or composite metal (such as copperaluminum composite housing) shell, an aluminum-plastic film, or the like.

For example, the battery cell may be a cylindrical battery cell, prismatic battery cell, pouch battery cell, or battery cell of another shape. Prismatic battery cells include square battery cells, blade battery cells, and multi-prismatic battery cells, and multi-prismatic battery cells are for example hexagonal battery cells.

In some embodiments, the battery may be a battery module. When there are multiple battery cells, the multiple battery cells are arranged and fixed to form one battery module. The battery module may the multiple battery cells connected in series, parallel, or series-parallel.

In some embodiments, the battery may be a battery pack. The battery pack includes a box and battery cells, with the battery cells or battery modules accommodated within the box.

In some embodiments, the box may be a part of the structure of the electric apparatus itself, for example, a part of a chassis structure of a vehicle using the battery. A part of the box may be at least a part of the chassis of the vehicle. Alternatively, a part of the box may be at least a part of the vehicle's cross members and roof rails.

In some embodiments, the battery may be an energy storage apparatus. Energy storage apparatuses include energy storage containers, energy storage cabinets, and the like.

In terms of electric devices using a battery, the electric devices may be mobile phones, portable devices, notebook computers, electric bicycles, electric vehicles, ships, spacecrafts, electric toys, electric tools, and the like. For example, the spacecraft includes an airplane, a rocket, a space shuttle, and a spaceship; the electric toy includes a fixed or mobile electric toy, for example, a game console, an electric vehicle toy, an electric ship toy, an electric airplane toy, and the like; and the electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, an electric planer, and the like.

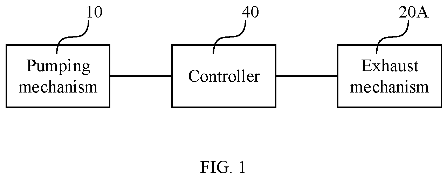

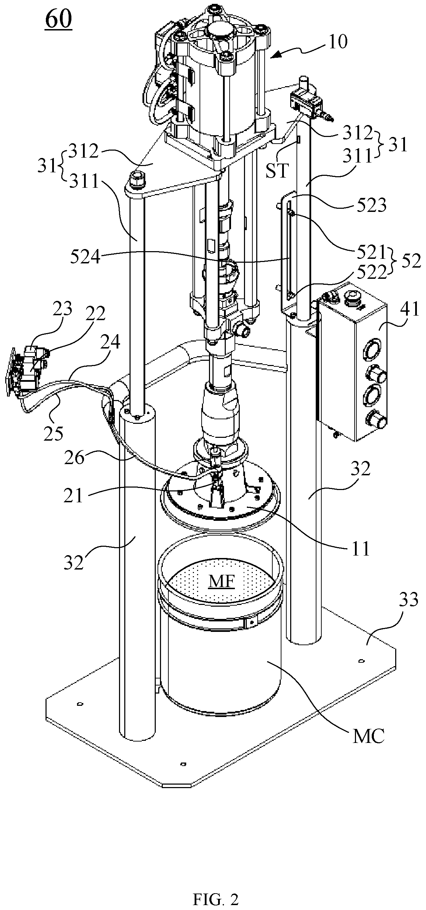

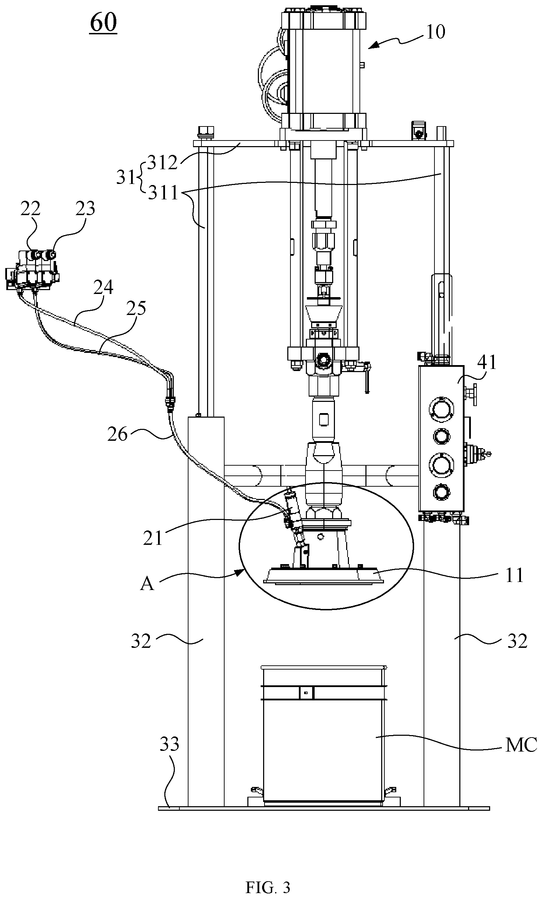

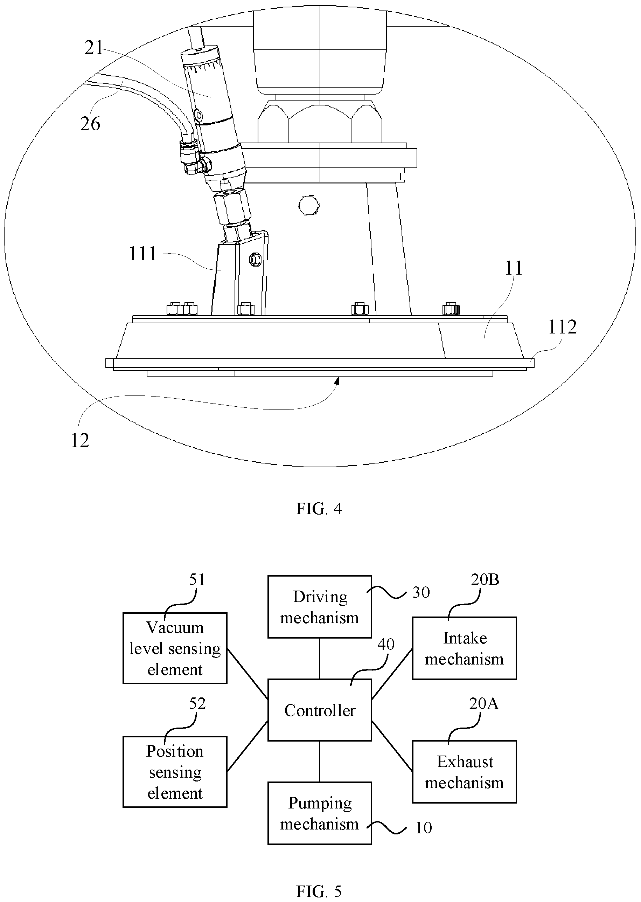

FIG. 1 is a schematic diagram of signal connection according to some embodiments of a feeding apparatus of this disclosure. FIG. 2 and FIG. 3 are schematic structural diagrams from different perspectives according to some embodiments of a feeding apparatus of this disclosure. FIG. 4 is an enlarged schematic diagram of ellipse A in FIG. 3.

Referring to FIG. 1 to FIG. 4, an embodiment of this disclosure provides a feeding apparatus 60 including a pumping mechanism 10, an exhaust mechanism 20A, and a controller 40. The pumping mechanism 10 has a suction end 12 configured to suction a material fluid MF from a material container MC, where the suction end 12 is provided with a pressing member 11. A pressure plate outer edge 112 may be disposed around a periphery of the pressing member 11 so that it can come into sealed contact with an inner surface of the material container MC after entering the material container MC, thereby meeting the requirements like vacuum evacuation and material pumping.

The material container MC may include the material buckets shown in FIG. 2 and FIG. 3. The suction end 12 disposed with the pressing member 11 can enter from an opening side of the material bucket, so that the pumping mechanism 10 suctions the material fluid MF from the material bucket through the suction end 12 and delivers it to a device that applies the material fluid MF to the target object.

The exhaust mechanism 20A is disposed on the pressing member 11 and configured to evacuate a first region Z1 formed between the pressing member 11 and a liquid surface of the material fluid MF in the material container MC.

After entering the material container MC, the pressing member 11 can form the first region Z1 together with the liquid surface of the material fluid MF in the material container MC, and that region contains a certain amount of air. The exhaust mechanism 20A evacuates the first region Z1 to reduce air in that region, thereby helps to reduce bubbles in the material fluid suctioned by the pumping mechanism 10.

The first region Z1 herein refers to the region between the pressing member 11 and the liquid surface of the material fluid MF. When there is a void between the pressing member 11 and the liquid surface of the material fluid MF, the first region Z1 takes the form of a three-dimensional cavity. When the pressing member 11 is in contact with the liquid surface of the material fluid MF without a void, the first region Z1 takes the form of a two-dimensional surface and can change back to a three-dimensional cavity after inflated.

The controller 40 is signally connected to the exhaust mechanism 20A and configured to: in response to the pressing member 11 arriving at a first relative position with respect to the material container MC, make the exhaust mechanism 20A to perform evacuation.

The controller 40 may include a general-purpose processor, a digital signal processor (DSP), an application-specific integrated circuit (ASIC), or a field-programmable gate array (FPGA) and may be implemented or performed by other programmable logic devices, discrete gates or transistor logic, or discrete hardware components, or any combination designed to implement the functions described in this specification. The general-purpose processor may be a microprocessor, but in an alternative embodiment, the processor may be any conventional processor, controller, microcontroller, or state machine. The processor may also be implemented as a combination of computing devices, such as a combination of DSP and microprocessor, multiple microprocessors, one or more microprocessors cooperating with a DSP core, or any other such configurations.

In the this embodiment of the feeding apparatus 60, during feeding the material fluid MF in the material container MC, in response to the pressing member 11 reaching the first relative position with respect to the material container MC, the controller 40 makes the exhaust mechanism 20A evacuate the first region Z1 formed between the pressing member 11 disposed on the suction end 12 of the pumping mechanism 10 and the liquid surface of the material fluid MF, so as to eliminate bubbles in the material fluid MF pumped to the largest extent, save labor, simplify manual operations, and reduce quality risks caused by imprecise or inexperienced manual operations.

The first relative position herein refers to a predetermined relative position of the pressing member 11 with respect to the material container MC. The predetermined relative position may be an orientation relationship, distance, or the like between the two in at least one direction. For example, the first relative position may be indicated by a set distance from a lower surface of the pressing member 11 to a bottom of the material container MC in the downward vertical direction.

FIG. 5 is a schematic diagram of signal connection according to some other embodiments of a feeding apparatus of this disclosure. Referring to FIG. 2 to FIG. 5, in some embodiments, the feeding apparatus 60 further includes a vacuum level sensing element 51 and a driving mechanism 30. The vacuum level sensing element 51 is disposed on the exhaust mechanism 20A or the pressing member 11 and configured to sense a vacuum level of the first region Z1. The vacuum level sensing element 51 may include a vacuum sensor.

The driving mechanism 30 is drivably connected to the pressing member 11 and configured to drive the pressing member 11 to move with respect to the material container MC. The driving mechanism 30 herein may directly drive the pressing member 11 to move or drive the pressing member 11 to move through the pumping mechanism 10. The driving mechanism 30 may be a driving mechanism based on electromagnetic, gas, or hydraulic principles.

The controller 40 is signally connected to the vacuum level sensing element 51, the pumping mechanism 10, and the driving mechanism 30 and configured to: in response to the vacuum level of the first region Z1 reaching a preset vacuum level threshold, make the exhaust mechanism 20A stop evacuating, make the pressing member 11 press the liquid surface of the material fluid MF in the material container MC via the driving mechanism 30, and make the pumping mechanism 10 pump the material fluid MF.

The vacuum level sensing element 51 can sense the vacuum level of the first region Z1, and in response to the vacuum level of the first region Z1 reaching the preset vacuum level threshold, the controller 40 controls all of the exhaust mechanism 20A, the driving mechanism 30, and the pumping mechanism 10 to enable the cessation of evacuating, pressing of the pressing member 11 on the liquid surface, and pumping of the material fluid MF. This ensures that the pumping operation can automatically proceed after the evacuation is completed, making the feeding process smoother and improving process efficiency.

Different types of material fluids MF have different pumping requirements, and correspondingly, the vacuum level requirements during pumping are also different. For example, a proper vacuum level range set for structural adhesive is -8 kPa to -15 kPa, and a proper vacuum level range set for thermally conductive adhesive is -10 kPa to -30 kPa. Therefore, different vacuum level thresholds may be set for different types of material fluids MF. In other words, the preset vacuum level threshold is adjustable.

With the preset vacuum level threshold being adjustable, when implementing automatic pumping of material fluids MF, the controller 40 can make the set vacuum level threshold adapt to different types of material fluids MF, satisfying the pumping requirements of different types of material fluids MF. The adjustment of the vacuum level threshold herein may be set by operators depending on an actual situation, or an adjustment rule may be programmed into logic of the controller so that the controller can make automatic adjustment based on the type of material fluid.

Referring to FIG. 5, in some embodiments, the feeding apparatus 60 further includes an intake mechanism 20B. The intake mechanism 20B is disposed on the pressing member 11 and configured to inflate the first region Z1. The controller 40 is signally connected to the intake mechanism 20B and configured to: in response to the pressing member 11 reaching a second relative position with respect to the material container MC, make the intake mechanism 20B perform inflation so that the pressing member 11 detaches from the material container MC.

The second relative position herein refers to another predetermined relative position of the pressing member 11 with respect to the material container MC. The predetermined relative position may also be an orientation relationship, distance, or the like between the two in at least one direction. For example, the second relative position may be indicated by another set distance from a lower surface of the pressing member 11 to a bottom of the material container MC in the downward vertical direction.

When a certain amount of the material fluid MF in the material container MC has been pumped, it is necessary to replace the material container MC with another one containing material fluid MF. During pumping, to stably and reliably pump the material fluid MF, the pressing member 11 is usually in interference fit with the inner wall of the material container MC, making it somewhat difficult for the pressing member 11 to detach from the material container MC.

By responding to the pressing member 11 reaching the second relative position with respect to the material container MC, the controller 40 makes the intake mechanism 20B automatically inflate the first region Z1 formed between the pressing member 11 and the liquid surface of the material fluid MF, allowing the pressing member 11 to smoothly and quickly detach from the material container MC so that the material container MC is quickly replaced with another one, allowing for continuous material fluid MF pumping and improving process efficiency.

The relative position of the pressing member 11 with respect to the material container MC can be determined in various manners. For example, the position or moving distance of the pressing member 11 is sensed directly, the position or moving distance of a structure connected to the pressing member 11 is sensed, or the position or moving distance of the pressing member 11 is indirectly calculated based on the velocity and travel time of the pressing member 11.

In the embodiment in which the driving mechanism 30 is drivably connected to the pressing member 11, the feeding apparatus 60 further includes a position sensing element 52. The position sensing element 52 is signally connected to the controller 40 and configured to sense at least one of the pumping mechanism 10, the driving mechanism 30, and the pressing member 11 to determine a relative position of the pressing member 11 with respect to the material container MC. The position sensing element 52 can sense at least one of the pumping mechanism 10, the driving mechanism 30, and the pressing member 11 to determine a relative position of the pressing member 11 with respect to the material container MC.

Referring to FIG. 2 and FIG. 3, in some embodiments, the driving mechanism 30 may include a movable driving member 31, where the driving member 31 is connected to the pumping mechanism 10 so that the pressing member 11 moves with respect to the material container MC along with the movement of the driving member 31. The position sensing element 52 may include a first position sensor 521 configured to sense movement of the driving member 31 to a first movement position corresponding to the first relative position.

The first movement position herein refers to a preset position to which the driving member 31 moves, and this preset position corresponds to the first relative position. In other words, when the driving member 31 reaches the first movement position, the pressing member 11 reaches the first relative position with respect to the material container MC.

The movable driving member 31 is used to drive the pumping mechanism 10 to move and the first position sensor 521 is used to sense the driving member 31 reaching the first movement position. When it is sensed that the driving member 31 has reached the first movement position, the pressing member 11 reaches the first relative position accordingly, triggering the evacuating action of the exhaust mechanism 20A. Compared with a sensing element that directly senses the position of the pressing member 11, the first position sensor 521 that senses the movement position of the driving member 31 is more convenient for debugging and mounting, and either a contact or non-contact sensor can be used as needed.

To make the pressing member 11 detach from the material container MC through automatic inflation, referring to FIG. 2 and FIG. 3, in some embodiments, the position sensing element 52 includes a second position sensor 522, the feeding apparatus 60 further includes an intake mechanism 20B disposed on the pressing member 11, and the controller 40 is signally connected to the second position sensor 522 and the intake mechanism 20B and configured to: in response to the pressing member 11 reaching a second relative position with respect to the material container MC, make the intake mechanism 20B perform inflation so that the pressing member 11 detaches from the material container MC. The second position sensor 522 is configured to sense the movement of the driving member 31 to a second movement position corresponding to the second relative position.

The second movement position herein refers to another preset position to which the driving member 31 moves, and this preset position corresponds to the second relative position. In other words, when the driving member 31 reaches the second movement position, the pressing member 11 reaches the second relative position with respect to the material container MC.

The second position sensor 522 is used to sense the driving member 31 reaching the second movement position. When it is sensed that the driving member 31 has reached the second movement position, the pressing member 11 reaches the second relative position accordingly, triggering the inflation action of the intake mechanism 20B. Like the first position sensor 521 disposed, the second position sensor 522 is also more convenient for debugging and mounting and either a contact or non-contact sensor type can be used as needed.

Refer to FIG. 2 and FIG. 3. The driving mechanism 30 may include a connecting plate 312 and a piston cylinder having a cylinder barrel 32 and piston rods 311. The connecting plate 312 is fixedly connected to the piston rods 311 and together with the connecting plate 312 serves as the driving member 31 that is fixedly connected to the pumping mechanism 10, and the first position sensor 521 and the second position sensor 522 are connected to the cylinder barrel 32 via a mounting rack 523 and each configured to check whether a sensing target ST disposed on the piston rod 311 is in position.

For the piston cylinder implementing linear driving, the first position sensor 521 and the second position sensor 522 may be disposed on the outer side of the piston cylinder to check the sensing target ST on the piston rod 311, making it convenient for operators to debug and mount the sensors.

The sensing target ST on the piston rod 311 may be a sensible color marking or element at a particular position of the piston rod 311, for example, a sensing ring fitted around at a specific position of the piston rod 311. The first position sensor 521 and the second position sensor 522 can be sensors of various forms, with few limitations imposed thereon, for example, sensors utilizing contact, proximity, or photoelectric principles.

The driving mechanism 30 may further include a base 33 for the fixing of the cylinder barrel 32 and the disposition of the material container MC. The driving mechanism 30 may include two piston cylinders, and the cylinder barrels 32 are both fixedly connected to the base 33. The piston rods 311 are fixedly connected to two ends of the connecting plate 312 respectively through connectors like bolts. To facilitate manual control for operators, a control box 41 with buttons, knobs, or handles may be disposed on the cylinder barrel 32.

Referring to FIG. 2, in some embodiments, the mounting rack 523 has an adjustment groove 524, a length direction of the adjustment groove 524 is parallel to a linear direction of reciprocation of the piston rod 311, and the first position sensor 521 and the second position sensor 522 are disposed within the adjustment groove 524 and adjustable in the length direction of the adjustment groove 524.

Based on the linear direction of reciprocation of the piston rod 311, the first position sensor 521 and the second position sensor 522 are disposed in the adjustment groove 524 extending in that direction, and the positions of the sensors can be adjusted in the length direction of the adjustment groove 524. In this way, the positions of the sensors can be adaptively adjusted based on factors such as the heights of different material containers MC and the liquid levels of material fluids MF, enabling more precise timing for automatic evacuation and automatic inflation.

In some other embodiments, the mounting rack 523 may be provided with multiple mounting holes for selectively mounting the first position sensor 521 and the second position sensor 522, thereby enabling position adjustment for the first position sensor 521 and the second position sensor 522. In some embodiments, positions of the first position sensor 521 and the second position sensor 522 may alternatively be unadjustable.

Referring to FIG. 2 to FIG. 4, in some embodiments, the exhaust mechanism 20A includes an air valve 21, and the air valve 21 is detachably disposed on the pressing member 11 and operatively connected to an external air path. The exhaust mechanism 20A is operatively connected to the external air path through the air valve 21 detachably mounted on the pressing member 11, facilitating the cleaning and replacement of the air valve 21 while conveniently evacuating the first region Z1 formed between the pressing member 11 and the liquid surface of the material fluid MF through the external air path.

Referring to FIG. 4, in some embodiments, an air valve connector 111 may be disposed on the surface of the pressing member 11, and the air valve 21 is threadedly connected to the air valve connector 111. During use, the air valve 21 may be contaminated or blocked by a material fluid containing a corrosive substance. Therefore, the threaded connection between the air valve 21 and the air valve connector 111 allows for easy removal and replacement.

Referring to FIG. 2 and FIG. 3, in some embodiments, the intake mechanism 20B disposed on the pressing member 11 shares the air valve 21 with the exhaust mechanism 20A. The intake mechanism 20B and the exhaust mechanism 20A can be independently disposed or integrated into one module for convenient mounting and maintenance. With the intake mechanism 20B and the exhaust mechanism 20A sharing the air valve 21, less space can be occupied during the mounting on the pressing member 11, thereby saving removing and mounting time and improving the removing and mounting efficiency.

For ease of controlling the exhaust mechanism 20A and the intake mechanism 20B, referring to FIG. 2 and FIG. 3, in some embodiments, the exhaust mechanism 20A may include a first control valve 22, and the air valve 21 operatively communicates with an external vacuum air path via the first control valve 22. The intake mechanism 20B may include a second control valve 23, and the air valve 21 operatively communicates with an external positive pressure air path via the second control valve 23.

For the exhaust mechanism 20A and the intake mechanism that share the air valve 21, the vacuum air path and the positive pressure air path are made to operatively communicate with the air valve 21 by the first control valve 22 and the second control valve 23 respectively, implementing reliable control of air intake or exhaust. This reduces space occupied and reduces the possibility of structural and piping interference between the exhaust mechanism 20A, the intake mechanism 20B, and other components.

Referring to FIG. 2 to FIG.4, the air valve 21 is connected to the connecting air path 26, and through three-way valves, the connecting air path 26 is connected to both the vacuum air path 24 that communicates with the first control valve 22 and the positive pressure air path 25 that communicates with the second control valve 23. The first control valve 22 and the second control valve 23 are further connected to relevant external air paths of the negative pressure device and the positive pressure device, respectively.

The air valve 21, the first control valve 22, the second control valve 23, and their respective connected air paths can be mounted and removed as an integrated module independent of other mechanisms such as the pumping mechanism and driving mechanism of the feeding apparatus, facilitating overall replacement and maintenance.

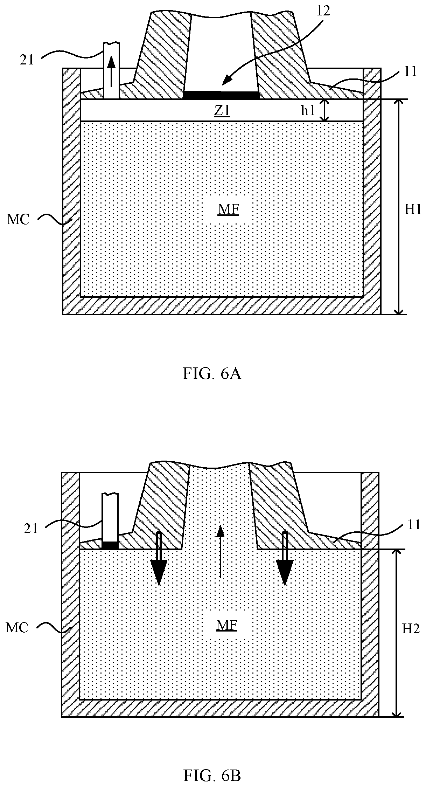

FIG. 6A to FIG. 6D are state diagrams of the interior of a material container in different working processes according to some embodiments of a feeding apparatus of this disclosure. To more clearly explain the working process of the feeding apparatus, the positional changes and functional implementation of the driving mechanism, pumping mechanism, intake mechanism, and exhaust mechanism at different stages are described with reference to FIG. 6A to FIG. 6D and FIG. 2 to FIG. 4.

For ease of observing the position change of the pressing member 11, only partial structures of the material container MC and the pumping mechanism 10 near the suction end 12, the pressing member 11, and the air valve 21 are depicted in FIG. 6A to FIG. 6D. The flow directions of the gas and material fluid are indicated by arrows. Closing of the air path or material fluid flow path is indicated by a large black block.

Refer to FIG. 6A. When the driving mechanism 30 drives the pressing member 11 to move into the material container MC, with the distance to a reference position for example, the bottom or another position of the material container MC in the vertical direction being H1, the pressing member 11 reaches the first relative position with respect to the material container MC. At this point, the height of the first region Z1 formed between the lower surface of the pressing member 11 and the liquid surface of the material fluid MF in the material container MC is h1 in the vertical direction, and the first region Z1 is full of air.

At the position shown in FIG. 6A, the controller 40 sends a control instruction to the exhaust mechanism 20A to make the exhaust mechanism 20A suction the air out of the first region Z1 through the air valve 21 in the direction indicated by the arrow. At this point, the pressing member 11 can remain stationary with respect to the material container MC.

When determining that the vacuum level in the first region Z1 sensed by the vacuum level sensing element 51 has reached the preset vacuum level threshold, the controller 40 closes the air valve 21, drives, through the driving mechanism, the pressing member 11 to move downward, come into contact with, and press the liquid surface of the material fluid MF, and suctions the material fluid MF through the suction end 12 of the pumping mechanism 10 to pump the material fluid MF.

FIG. 6B shows the pressing member 11 moving downward to a position at which the distance to a reference position of the material container MC is H2 in the vertical direction. The moving direction of the pressing member 11 is indicated by the lines with a hollow arrow. It can be seen that the liquid surface of the material fluid MF has drooped and the fluid is being suctioned upward by the suction end 12.

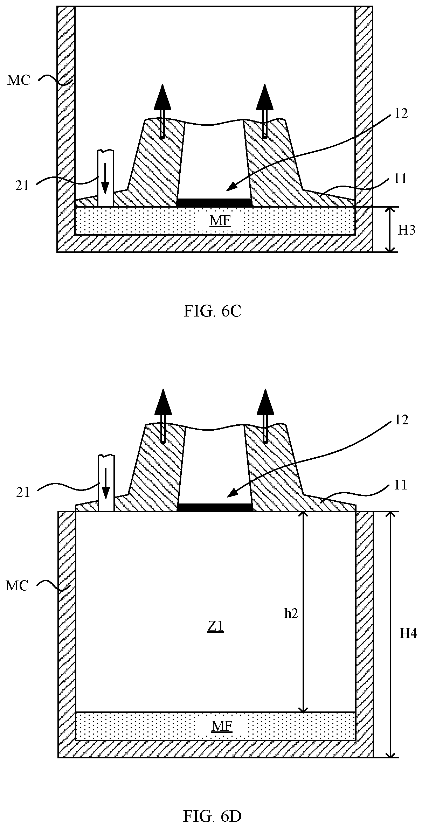

When the pumping mechanism 10 has pumped a certain amount of the material fluid MF, both the pressing member 11 and the liquid surface of the material fluid MF have dropped to a low position. Refer to FIG. 6C. When the distance from the pressing member 11 to a reference position of the material container MC is H3 in the vertical direction, the pressing member 11 reaches the second relative position with respect to the material container MC. At this point, the controller 40 sends a control instruction to both the pumping mechanism 10 and the intake mechanism 20B to close the suction end 12 of the pumping mechanism 10, open the air valve 21, and inject positive pressure gas such as compressed air, into the first region Z1.

With the positive pressure gas injected, the height of the first region Z1 gradually increases until it reaches the position shown in FIG. 6D. At this position, the distance from the pressing member 11 to the reference position of the material container MC is H4 in the vertical direction. The pressing member 11 has detached from the material container MC, and the height of the first region Z1 is h2 in the vertical direction. In this way, the automatic process of detaching the pressing member 11 from the material container MC is completed.

In the above process, h2 is greater than h1, H1 is greater than H2, H2 is greater than H3, and H4 is greater than H1.

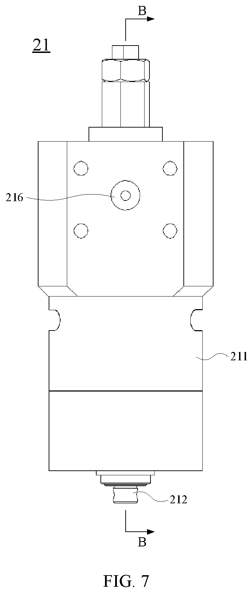

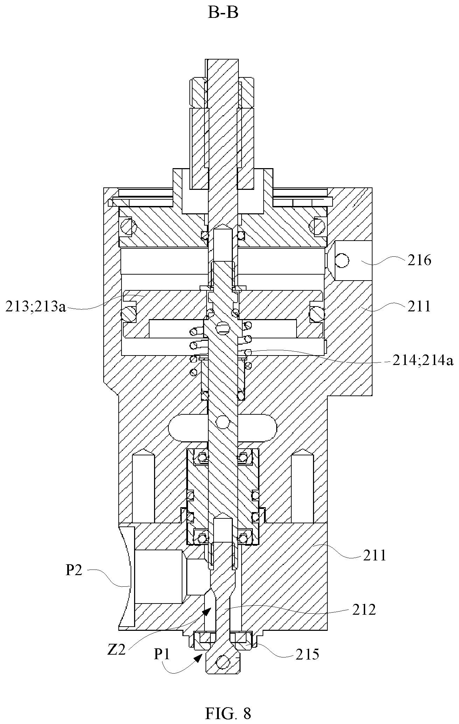

FIG. 7 is a schematic structural diagram of an air valve according to some embodiments of a feeding apparatus of this disclosure. FIG. 8 is a schematic sectional view along line BB shown in FIG. 7. Referring to FIG. 7 and FIG. 8, in some embodiments, the air valve 21 includes a cylinder valve body 211, a valve core 212, a valve core driving structure 213, and a reset member 214. The cylinder valve body 211 has a hollow second region Z2 inside, where the cylinder valve body 211 also has a first air port P1 and a second air port P2 in communication with the second region Z2, the first air port P1 is in communication with the first region Z1, and the second air port P2 is operatively connected to an external air path. The external air path may be a vacuum negative pressure air path or an inflated positive pressure air path.

The second region Z2 herein refers to a hollow region inside the cylinder valve body 211 that provides space for the movement of at least the valve core 212. The second region Z2 can form an open air path with both the first air port P1 and the second air port P2 when the valve core 212 is at a position that enables both the first air port P1 and the second air port P2 to be opened.

The valve core 212 is at least partially located within the second region Z2 and movable with respect to the second region Z2. The valve core driving structure 213 is connected to the valve core 212 and configured to drive the valve core 212 to move to different positions within the second region Z2 so as to close or open air paths corresponding to the first air port P1 and the second air port P2 in the second region Z2.

The reset member 214 is connected to the valve core 212 and configured to: in response to the valve core driving structure 213 stopping operation, move the valve core 212 to a closing position that enables the air paths corresponding to the first air port P1 and the second air port P2 in the second region Z2 to be closed.

The reset member 214 is disposed within the air valve 21 and the reset member 214 is made to respond to the cessation of operation of the valve core driving structure 213, so that the valve core 212 is moved to the closing position that enables the air path corresponding to the first air port P1 and the second air port P2 to be closed. In this way, in an anomaly case that the valve core driving structure 213 stops operating due to power failure or closed air path, the air valve 21 can close itself through the reset member 214, preventing the contamination or damage of the air valve 21 by the suction of the material fluid MF into the air valve 21 in an anomaly case.

Referring to FIG. 8, in some embodiments, the valve core driving structure 213 includes a cylinder piston 213a, the cylinder piston 213a is connected to the valve core 212, and the reset member 214 includes a spring 214a located in the second region Z2 and connected to the cylinder piston 213a. A cavity on a side of the cylinder piston 213a away from the spring 214a may communicate with a driving air port 216. When compressed air enters through the driving air port 216, the cylinder piston 213a moves towards the spring 214a, pressing the spring 214a. At this point, the valve core 212 moves to a position that enables the air path between the first air port P1 and the second air port P2 to be opened.

For the air valve 21 that employs the cylinder piston 213a to drive the valve core 212, the spring 214a provides elastic force for the valve core 212 to reset to the closing position in an anomaly case, implementing self-closing. This type of mechanical elastic reset member is reliable and durable, contributing to extending the service life of the air valve 21.

In FIG. 7 and FIG. 8, a part of the valve core 212 may extend out of the first air port P1 of the cylinder valve body 211. The extension and retraction of the valve core 212 with respect to the first air port P1 of the cylinder valve body 211 opens and closes the first air port P1. To reduce the risks of suctioning in the material fluid MF caused by leakage of the first air port P1, referring to FIG. 8, in some embodiments, the air valve 21 further includes a sealing assembly 215, and the sealing assembly 215 is located at the first air port P1 to make the valve core 212 at the position that enables the air paths corresponding to the first air port P1 and the second air port P2 in the second region Z2 to be closed seal the first air port P1 via the sealing assembly 215.

With the sealing assembly 215 disposed on the first air port P1, the first air port P1 can be sealed when the valve core 212 is driven by the valve core driving structure 213 to close the first air port P1 or closes the first air port P1, thereby reducing the risk of suction of material fluid MF caused by air leakage at the first air port P1.

In the embodiments of the feeding apparatus, the material fluid MF may include an adhesive. The adhesive can be a structural adhesive, insulation adhesive, waterproof adhesive, conductive adhesive, thermally conductive adhesive, or the like. Different types of material fluids MF may be used in different feeding scenarios, and different types of material fluids MF have different properties, parameters, and the like, for example, having different viscosities.

In the embodiment in which the material fluid MF includes an adhesive, the pumping mechanism 10 pumps the adhesive used for binding or sealing. Automatically evacuating the first region Z1 by using the exhaust mechanism 20A can effectively reduce bubbles in the adhesive pumped, thereby improving the processing quality of the structure that utilizes the adhesive.

For highly viscous material fluids MF, to meet the pumping requirements of highly viscous material fluids MF, in some embodiments, the feeding apparatus 60 further includes a driving mechanism 30, where the feeding apparatus 60 is a pressure plate pump, the pressure plate pump includes a plunger pump serving as the pumping mechanism 10, a pressure plate serving as the pressing member 11, and a vertical cylinder serving as the driving mechanism 30, the pressure plate is disposed at a suction end of the plunger pump, and cylinder piston rods 311 of the vertical cylinder are connected to the plunger pump via a mounting plate to drive the plunger pump to move.

In the embodiment in which the pressure plate pump is used as the feeding apparatus, the plunger pump can satisfy the pumping requirements of material fluids MF with a high viscosity, and the vertical cylinder can vertically drive the plunger pump to move up and down in the vertical direction so as to lift and drop the pressure plate.

Based on the various embodiments of the feeding apparatus 60 described above, an embodiment of this disclosure further provides a gluing device including a material container MC and the feeding apparatus 60 according to any one of the foregoing embodiments. The material container MC is configured to hold an adhesive. The feeding apparatus 60 is applied to the adhesive container to implement a gluing operation. The gluing device employing the embodiments of the foregoing feeding apparatus 60 can improve the automation of the gluing process, save labor, and reduce quality risks caused by imprecise or inexperienced manual operations.

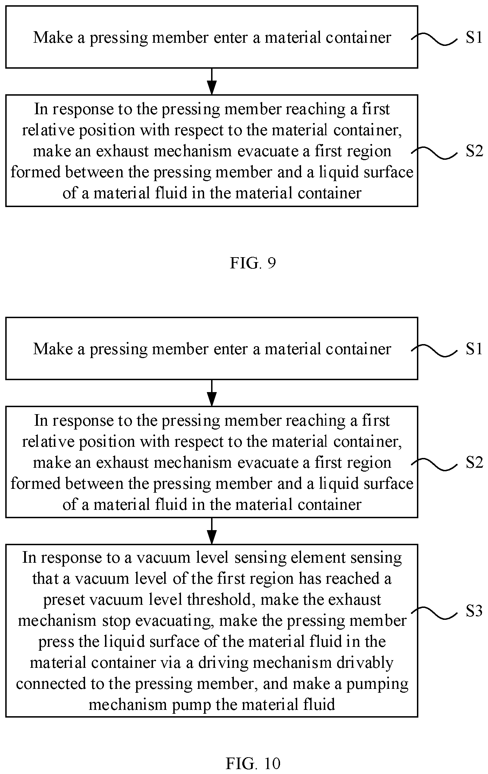

FIG. 9 to FIG. 11 are schematic flowcharts according to some embodiments of a control method of a feeding apparatus of this disclosure. Based on the various embodiments of the feeding apparatus 60 described above, an embodiment of this disclosure further provides a control method of the foregoing feeding apparatus. The control method includes steps S1 and S2. Step S1. Make the pressing member 11 enter the material container MC. Step S2. In response to the pressing member 11 reaching the first relative position with respect to the material container MC, make the exhaust mechanism 20A evacuate the first region Z1 formed between the pressing member 11 and the liquid surface of the material fluid MF in the material container MC.

During feeding the material fluid MF in the material container MC, in response to the pressing member 11 reaching the first relative position with respect to the material container MC, the exhaust mechanism 20A is made to evacuate the first region Z1 formed between the pressing member 11 disposed on the suction end 12 of the pumping mechanism 10 and the liquid surface of the material fluid MF, so as to eliminate bubbles in the material fluid MF pumped to the largest extent, save labor, and reduce quality risks caused by imprecise or inexperienced manual operations.

In this embodiment, step S1 and step S2 may be executed by the controller 40 in the embodiments of the feeding apparatus shown in FIG. 1 or FIG. 5.

Referring to FIG. 10, in some embodiments, the feeding apparatus further includes the vacuum level sensing element 51 disposed on the exhaust mechanism 20A or the pressing member 11, and the driving mechanism 30 drivably connected to the pressing member 11. As compared with FIG. 9, the control method further includes step S3. Step S3. In response to the vacuum level sensing element 51 sensing that the vacuum level of the first region Z1 has reached a preset vacuum level threshold, make the exhaust mechanism 20A stop evacuating, make the pressing member 11 press the liquid surface of the material fluid MF in the material container MC via the driving mechanism 30 drivably connected to the pressing member 11, and make the pumping mechanism 10 pump the material fluid MF.

The vacuum level sensing element 51 senses the vacuum level of the first region Z1, and the vacuum level of the first region Z1 reaching the preset vacuum level threshold is responded. In this way, all of the exhaust mechanism 20A, the driving mechanism 30, and the pumping mechanism 10 are controlled to enable the cessation of evacuating, pressing of the pressing member 11 on the liquid surface, and pumping of the material fluid MF. This ensures that the pumping operation can automatically proceed after the evacuation is completed, making the feeding process smoother and improving process efficiency.

In some embodiments, the control method further includes adjusting the preset vacuum level threshold to adapt to a type of the material fluid MF. With the preset vacuum level threshold being adjustable, in implementing automatic pumping of material fluids MF, the set vacuum level threshold can adapt to different types of material fluids MF, satisfying the pumping requirements of different types of material fluids MF.

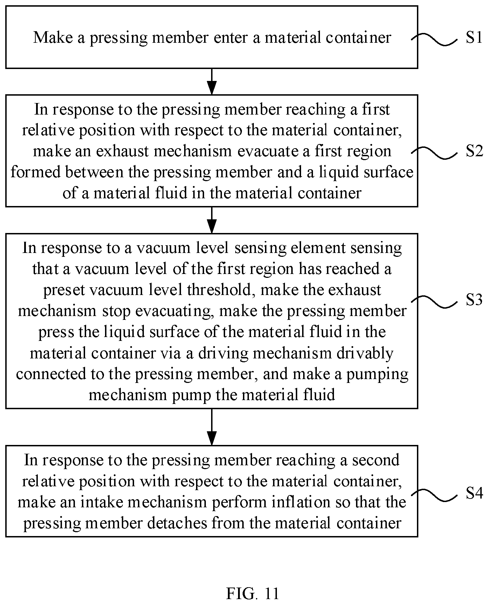

Referring to FIG. 11, in some embodiments, the feeding apparatus further includes an intake mechanism 20B disposed on the pressing member 11. As compared with FIG. 10, the control method further includes step S4. Step S4. In response to the pressing member 11 reaching the second relative position with respect to the material container MC, make the intake mechanism 20B perform inflation so that the pressing member 11 detaches from the material container MC.

When a certain amount of the material fluid MF in the material container MC has been pumped, it is necessary to replace the material container MC with another one containing material fluid MF. During pumping, to stably and reliably pump the material fluid MF, the pressing member 11 is usually in interference fit with the inner wall of the material container MC, making it somewhat difficult for the pressing member 11 to detach from the material container MC.

By responding to the pressing member 11 reaching the second relative position with respect to the material container MC, the controller 40 makes the intake mechanism 20B automatically inflate the first region Z1 formed between the pressing member 11 and the liquid surface of the material fluid MF, allowing the pressing member 11 to smoothly and quickly detach from the material container MC so that the material container MC is quickly replaced with another one, allowing for continuous material fluid MF pumping and improving process efficiency.

In the foregoing embodiments, step S3 and step S4 may be executed by the controller 40 in the embodiments of the feeding apparatus shown in FIG. 5.

Persons skilled in the art can understand that the order in which the steps are described in the specific embodiments does not necessarily imply a strict execution order and does not limit the implementation process in any way. The specific execution order of the steps should be determined by the function and possible inherent logic of the steps.

Multiple embodiments in this specification are described in a progressive manner, the embodiments focus on different points, and the same and similar parts between the embodiments may refer to each other. For the method embodiment, since its overall structure and steps correspond to the content in the system embodiments, the description is relatively simple. For relevant information, refer to the description of the related parts in the system embodiments.

The embodiments of this disclosure have been described in detail. To avoid obscuring the concept of this disclosure, some well-known details in the art have not been described. Based on the above description, persons skilled in the art can fully understand how to implement the technical solutions disclosed herein.

Although some specific embodiments have been detailed in this disclosure by using examples, persons skilled in the art should understood that the foregoing examples are for illustration purposes only and not intended to limit the scope of this disclosure. Persons skilled in the art should understand that modifications can be made to the above embodiments or make equivalent replacements to some technical features without departing from the scope and spirit of this disclosure. The scope of this disclosure is defined by the appended claims.

## Claims

1. A feeding apparatus (60), comprising:
a pumping mechanism (10) having a suction end (12) configured to suction a material fluid (MF) from a material container (MC), wherein the suction end (12) is provided with a pressing member (11);
an exhaust mechanism (20A) disposed on the pressing member (11) and configured to evacuate a first region (Z1) formed between the pressing member (11) and a liquid surface of the material fluid (MF) in the material container (MC); and
a controller (40) signally connected to the exhaust mechanism (20A) and configured to: in response to the pressing member (11) arriving at a first relative position with respect to the material container (MC), make the exhaust mechanism (20A) to perform evacuation.

2. The feeding apparatus (60) according to claim 1, further comprising:
a vacuum level sensing element (51) disposed on the exhaust mechanism (20A) or the pressing member (11) and configured to sense a vacuum level of the first region (Z1); and
a driving mechanism (30) drivably connected to the pressing member (11) and configured to drive the pressing member (11) to move with respect to the material container (MC);
wherein the controller (40) is signally connected to the vacuum level sensing element (51), the pumping mechanism (10), and the driving mechanism (30) and configured to: in response to the vacuum level of the first region (Z1) reaching a preset vacuum level threshold, make the exhaust mechanism (20A) stop evacuating, make the pressing member (11) press the liquid surface of the material fluid (MF) in the material container (MC) via the driving mechanism (30), and make the pumping mechanism (10) pump the material fluid (MF).

3. The feeding apparatus (60) according to claim 2, wherein the preset vacuum level threshold is adjustable.

4. The feeding apparatus (60) according to any one of claims 1 to 3, further comprising:
an intake mechanism (20B) disposed on the pressing member (11) and configured to inflate the first region (Z1);
wherein the controller (40) is signally connected to the intake mechanism (20B) and configured to: in response to the pressing member (11) reaching a second relative position with respect to the material container (MC), make the intake mechanism (20B) perform inflation so that the pressing member (11) detaches from the material container (MC).

5. The feeding apparatus (60) according to any one of claims 1 to 4, further comprising:
a driving mechanism (30) drivably connected to the pressing member (11) and configured to drive the pressing member (11) to move with respect to the material container (MC); and
a position sensing element (52) signally connected to the controller (40) and configured to sense at least one of the pumping mechanism (10), the driving mechanism (30), and the pressing member (11) to determine a relative position of the pressing member (11) with respect to the material container (MC).

6. The feeding apparatus (60) according to claim 5, wherein the driving mechanism (30) comprises a movable driving member (31), wherein the driving member (31) is connected to the pumping mechanism (10) so that the pressing member (11) moves with respect to the material container (MC) along with the movement of the driving member (31), and the position sensing element (52) comprises a first position sensor (521) configured to sense movement of the driving member (31) to a first movement position corresponding to the first relative position.

7. The feeding apparatus (60) according to claim 6, wherein the position sensing element (52) comprises a second position sensor (522), the feeding apparatus (60) further comprises an intake mechanism (20B) disposed on the pressing member (11), and the controller (40) is signally connected to the second position sensor (522) and the intake mechanism (20B) and configured to: in response to the pressing member (11) reaching a second relative position with respect to the material container (MC), make the intake mechanism (20B) perform inflation so that the pressing member (11) detaches from the material container (MC); wherein the second position sensor (522) is configured to sense the movement of the driving member (31) to a second movement position corresponding to the second relative position.

8. The feeding apparatus (60) according to claim 7, wherein the driving mechanism (30) comprises a connecting plate (312) and a piston cylinder having a cylinder barrel (32) and piston rods (311), the connecting plate (312) is fixedly connected to the piston rods (311) and together with the connecting plate (312) serves as the driving member (31) that is fixedly connected to the pumping mechanism (10), and the first position sensor (521) and the second position sensor (522) are connected to the cylinder barrel (32) via a mounting rack (523) and each configured to check whether a sensing target (ST) disposed on the piston rod (311) is in position.

9. The feeding apparatus (60) according to claim 8, wherein the mounting rack (523) has an adjustment groove (524), a length direction of the adjustment groove (524) is parallel to a linear direction of reciprocation of the piston rod (311), and the first position sensor (521) and the second position sensor (522) are disposed within the adjustment groove (524) and adjustable in the length direction of the adjustment groove (524).

10. The feeding apparatus (60) according to any one of claims 1 to 9, wherein the exhaust mechanism (20A) comprises an air valve (21), and the air valve (21) is detachably disposed on the pressing member (11) and operatively connected to an external air path.

11. The feeding apparatus (60) according to claim 10, wherein the air valve (21) comprises:
a cylinder valve body (211) having a hollow second region (Z2) inside, wherein the cylinder valve body (211) also has a first air port (P1) and a second air port (P2) in communication with the second region (Z2), the first air port (P1) is in communication with the first region (Z1), and the second air port (P2) is operatively connected to an external air path;
a valve core (212) at least partially located within the second region (Z2) and movable with respect to the second region (Z2);
a valve core driving structure (213) connected to the valve core (212) and configured to drive the valve core (212) to move to different positions within the second region (Z2) so as to close or open air paths corresponding to the first air port (P1) and the second air port (P2) in the second region (Z2); and
a reset member (214) connected to the valve core (212) and configured to: in response to the valve core driving structure (213) stopping operation, move the valve core (212) to a closing position that enables the air paths corresponding to the first air port (P1) and the second air port (P2) in the second region (Z2) to be closed.

12. The feeding apparatus (60) according to claim 11, wherein the valve core driving structure (213) comprises a cylinder piston (213a), the cylinder piston (213a) is connected to the valve core (212), and the reset member (214) comprises a spring (214a) located in the second region (Z2) and connected to the cylinder piston (213a).

13. The feeding apparatus (60) according to claim 11 or 12, wherein the air valve (21) further comprises a sealing assembly (215), and the sealing assembly (215) is located at the first air port (P1) to make the valve core (212) at the position that enables the air paths corresponding to the first air port (P1) and the second air port (P2) in the second region (Z2) to be closed seal the first air port (P1) via the sealing assembly (215).

14. The feeding apparatus (60) according to any one of claims 10 to 13, further comprising:
an intake mechanism (20B) disposed on the pressing member (11) and configured to inflate the first region (Z1);
wherein the intake mechanism (20B) shares the air valve (21) with the exhaust mechanism (20A).

15. The feeding apparatus (60) according to claim 14, wherein the exhaust mechanism (20A) further comprises a first control valve (22), the air valve (21) operatively communicates with an external vacuum air path via the first control valve (22), the intake mechanism (20B) further comprises a second control valve (23), and the air valve (21) operatively communicates with an external positive pressure air path via the second control valve (23).

16. The feeding apparatus (60) according to any one of claims 10 to 15, wherein a surface of the pressing member is provided with an air valve connector (111), and the air valve (21) is threadedly connected to the air valve connector (111).

17. The feeding apparatus (60) according to any one of claims 1 to 16, wherein the material fluid (MF) comprises an adhesive.

18. The feeding apparatus (60) according to any one of claims 1 to 17, further comprising a driving mechanism (30), wherein the feeding apparatus (60) is a pressure plate pump, the pressure plate pump comprises a plunger pump serving as the pumping mechanism (10), a pressure plate serving as the pressing member (11), and a vertical cylinder serving as the driving mechanism (30), the pressure plate is disposed at a suction end of the plunger pump, and cylinder piston rods (311) of the vertical cylinder are connected to the plunger pump via a mounting plate to drive the plunger pump to move.

19. A gluing device comprising:
a material container (MC) configured to hold an adhesive; and
the feeding apparatus (60) according to any one of claims 1 to 18, applied to the adhesive container to implement a gluing operation.

20. A control method of the feeding apparatus (60) according to any one of claims 1 to 18, comprising:
making the pressing member (11) enter the material container (MC); and
in response to the pressing member (11) reaching the first relative position with respect to the material container (MC), making the exhaust mechanism (20A) evacuate the first region (Z1) formed between the pressing member (11) and the liquid surface of the material fluid (MF) in the material container (MC).

21. The control method according to claim 20, wherein the feeding apparatus (60) further comprises the vacuum level sensing element (51) disposed on the exhaust mechanism (20A) or the pressing member (11), and the driving mechanism (30) drivably connected to the pressing member (11), and the control method further comprises:
in response to the vacuum level sensing element (51) sensing that the vacuum level of the first region (Z1) has reached a preset vacuum level threshold, making the exhaust mechanism (20A) stop evacuating, making the pressing member (11) press the liquid surface of the material fluid (MF) in the material container (MC) via the driving mechanism (30) drivably connected to the pressing member (11), and making the pumping mechanism (10) pump the material fluid (MF).

22. The control method according to claim 21, further comprising:
adjusting the preset vacuum level threshold to adapt to a type of the material fluid (MF).

23. The control method according to claim 21 or 22, wherein the feeding apparatus (60) further comprises the intake mechanism (20B) disposed on the pressing member (11), and the control method further comprises:
in response to the pressing member (11) reaching the second relative position with respect to the material container (MC), making the intake mechanism (20B) perform inflation so that the pressing member (11) detaches from the material container (MC).
